# EUROPEAN PATENT SPECIFICATION

(11) **EP 0 485 225 B1**
(45) Date of publication and mention of the grant of the patent: **26.04.1995**
(21) Application number: 91310332.1
(22) Date of filing: 07.11.1991
(51) Int. Cl.: C05D 9/02, C05G 3/00

(54) **Micronutrient compositions**
Spurenelementezusammensetzungen
Compositions de micro-éléments nutritifs

(30) Priority: 08.11.1990 GB 9024357; 16.05.1991 GB 9110600
(43) Date of publication of application: 13.05.1992
(73) Proprietor: PHOSYN PLC, Pocklington York Y04 2NR (GB)
(72) Inventor: Orchard, Gerald, York Y01 3ND (GB); Tomkinson, David John, York Y04 2HU (GB)
(74) Representative: W.P. THOMPSON & CO.

(56) References cited:
- EP-A- 161 395
- DE-A- 2 422 173
- FR-A- 2 504 357
- US-A- 3 234 005
- US-A- 3 950 159
- WORLD PATENTS INDEX Section Ch, Week 6800, DerwentPublications Ltd., London, GB; Class C, AN 67-04273 & JP-A-68 022 206 (OTSUKA KAGAKU YAKUHIN CO.,LTD.)
- Holleman-Wiberg, Lehrbuch der Anorganischen Chemie, Walter de Gruyter & Co., Berlin, 1971, pages 505 - 510
- ;

## Description

This invention relates to micronutrient compositions for use in agriculture and horticulture.

Micronutrient compositions have been sold in the form of powders and in the form of liquids. Powder compositions must be dissolved or dispersed in a liquid, usually water, before application. This leads to problems, particularly when addition to the liquid is carried out in the open air, the powder easily being blown about by the wind. Liquid compositions are less prone to this disadvantage but have the disadvantage that their relatively large bulk makes them more difficult and more expensive to transport.

When it is desired to produce a micronutrient composition for supply of iron or manganese, it is usual to employ a water soluble iron or manganese compound, for example ferrous sulphate or manganese sulphate, which can be in the powder form mentioned above or in the liquid form as an aqueous solution. Both forms give rise to the problems mentioned above, liquid compositions being particularly disadvantageous because the maximum iron concentration obtainable in a composition suitable for agricultural use is only about 10% w/v and the maximum manganese concentration obtainable only about 19.5% w/v. The compositions are accordingly very bulky.

EP-A-0161395 discloses fertiliser compositons which contain iron phosphate dihydrate in amounts of up to 29.0% w/w. A composition containing magnesium salts in an amount of 47.6% w/w also contains manganese as a trace nutrient.

It has now been discovered that particularly effective iron or manganese micronutrient compositions can be provided in the form of an aqueous suspension concentrate comprising at least one insoluble micronutrient source and at least one surfactant, in which
(a) the micronutrient source is a source of iron and/or manganese which is present in an amount of at least 20% w/v, or
(b) the micronutrient source is a source of manganese which is present in an amount of from 10 to 80 w/v, and
the micronutrient source has a particle size in the range of from 0.5 to 50 »m, preferably 1 to 10 »m and more preferably 2 to 8 »m. Separate sources of iron and manganese, or a combined iron-manganese source can be used, in compositions containing both iron and manganese.

The compositions of the invention take the form of suspension concentrates for subsequent dilution and application to growing plants.

The compositions of the invention have the advantage that they are more easily handled than the powder compositions mentioned above. They can also be readily diluted with water for use, without the problems mentioned above as arising with powder compositions.

Compositions according to the invention have been found to be particularly effective in use in supplying iron and/or manganese as a micronutrient to growing plants. Particularly efficient uptake of iron and manganese by plants has been found when the particle size is in the range of 2 to 8»m.

Preferably, in this invention, at least 80% of the iron or manganese particles are in the particle size ranges stated, more preferably the proportion within the ranges is at least 90%.

The compositions according to the invention can be made by any convenient process, if necessary, involving reduction of the particle size of commercially available iron and/or manganese compounds to a value falling within one or more of the stated ranges. Particle size reduction can be by any convenient means, for example high speed dispersion using a cavitation mixer, ball milling or bead milling.

Compositions of the invention can contain iron in an amount of from 20% w/v up to 100% w/v, of even as high as 110 or 120% w/v, or from 10% w/v up to 80% w/v manganese (i.e. up to 1200g of iron or 800g of manganese per litre of composition) and thereby present a substantial advantage over the known liquid compositions mentioned above. As stated, these have a maximum iron content of only about 10% w/v and a maximum manganese content of only about 19.5% w/v. The compositions of the invention can accordingly be much less bulky than the known liquid compositions and are therefore more easily transported and handled.

The preferred overall iron and/or manganese content range for compositions according to the invention is from 20 to 80% w/v, with values of up to 100, 110 or 120% w/v being possible when the compositions contain iron only and values down to 10% w/v being possible when the compositions contain manganese only. For compositions containing iron only or containing a major amount of iron, the preferred range is 60 to 90% w/v, most preferably about 80% w/v. For compositions containing manganese only or a major amount of manganese, the preferred range is 40 to 55% w/v, most preferably about 50% w/v. Mixed compositions can contain from 40 to 90% w/v of iron and manganese.

In order to assist in their formation, the compositions also contain one or more surfactants, typically in an overall amount of 0.01 to 5.0 wgt % of the composition. The surfactant(s) can impart good wetting, liquifying and dispersing properties and can be ionic or non-ionic but preferably anionic and, more preferably, a sodium salt of a polycarboxylic acid.

The compositions may also contain an anti-freeze, in order to enhance their storage capabilities, a typical level being 5.0 to 35 wgt % of the composition. The anti-freeze may be an alcohol, preferably a polyol and more preferably monoethylene glycol.

Thickeners may also be included, in amounts of 0.01 to 5.0 wgt % of the composition. These may be, for example, a bentonite clay, an alkyl cellulose or, preferably, a polysaccharide, more preferably an anionic heteropolysaccharide.

Typical iron sources are water-insoluble compounds such as the iron carbonates and the iron oxides FeO, Fe₃O₄ and Fe₂O₃ which is preferred.

Typical manganese sources are water-insoluble compounds such as the manganese oxides MnO, Mn₂O₃ and MnO₂ and manganese carbonate MnCO₃ which is preferred.

The following Examples illustrate the invention further. Examples 1 and 2 describe the preparation of micronutrient compositions containing manganese and iron. Examples 3 and 4 describe the treatment of growing plants with the composition of Examples 1 and 2.

### EXAMPLE 1

500 g of water was introduced into the mixing vessel of a Silverson mixing machine and the mixing started at half speed. 100 g of ethylene glycol and 30 g of Dispex N40 surfactant (Allied Colloids) were then added to the water in the mixing vessel. To this mixture 1150 g of manganese carbonate was added slowly over a period of 10 minutes and mixing was continued until the mix was completely homogeneous and free flowing.

This resultant mixture was then pumped through a horizontal bead mill (Motormill, Eiger Engineering Ltd) at such a rate as to achieve the desired particle size range of 2 to 8 »m. The particle size was monitored using a Coulter Counter TA II multi-channel particle counter.

The mixture, now at the desired particle size, was then pumped back into the mixing vessel of a Silverson mixer. 2.5g of Rhodopol 23 thickener (Rhône-Poulenc) was then added very slowly into the mixing vessel and stirred for about 10 minutes until completely homogeneous, after which the mixing machine was stopped.

The composition produced a greyish brown coloured flowable dispersion, having a manganese carbonate concentration of 1150 g dm⁻³, corresponding to a manganese concentration of 506 g dm⁻³.

### EXAMPLE 2

600 g of water was introduced into the mixing vessel of a Torrance mixing machine and the mixing started at half speed. 100 g of ethylene glycol and 37 g of Dispex N40 surfactant (Allied Colloids) were then added to the water in the mixing vessel. To this mixture 1200 g of iron oxide Fe₂O₃ was added slowly over a period of 10 minutes and mixing was continued until the mix was completely homogeneous and free flowing.

This resultant mixture was then mixed at high speed using a Torrance mixing machine at such a rate and for such a time as to achieve deagglomeration and the desired particle size range of 2 to 8»m. The particle size was monitored using a Coulter Counter TA II multi-channel particle counter.

To the mixture, now at the desired particle size, 2.5 g of Rhodopol 50 MD thickener (Rhône-Poulenc) was then added very slowly into the mixing vessel and stirred for about 10 minutes until completely homogeneous, after which the mixing machine was stopped.

The composition produced was a dark red coloured flowable dispersion, having a ferric oxide concentration of 1144 g dm⁻³, corresponding to an iron concentration of 800 g dm⁻³.

### EXAMPLE 3

The uptake of iron into the new leaf of growing radish plants was shown by tests in which the iron composition of Example 2 was diluted and sprayed onto radishes growing in washed river sand at application rates of 0.50, 1.0, 1.5, 2.0, 3.0, 4.0, 5.0, 10 and 20 dm³ ha⁻¹. Spraying was carried out at the five-leaf stage, the existing leaves being marked beforehand and the roots earthed up. A collar fitted to the pot of each plant ensured that the leaves occupied a set area. Four replicates were carried out, with the tests being conducted on a randomised block basis. Harvesting took place after fourteen days. The plants were divided into three parts (leaves existing at time of spraying; root; new leaves having grown after spraying) and each part dried, prior to being ground to a powder and analysed for iron content. Tests carried out on the new leaf showed iron concentration and absolute iron values which increased steadily with increasing application rate. The percentage recovery rate of iron in new leaf was then calculated.

The test results are shown in Figures 1, 2 and 3 of the drawings, of which:
Figure 1 is a histogram showing the percentage recovery of iron from new leaf at each application rate,
Figure 2 is a graph of new leaf iron concentration against application rate, and
Figure 3 is a graph of new leaf absolute iron concentration against application rate.

The results show that the greatest efficiency of iron uptake is achieved at an application rate of around 3.0 dm³ ha⁻¹ and that, the higher the application rate, the more iron is found in the new leaf, both in concentration and absolute terms.

### EXAMPLE 4

The uptake of manganese into the new leaf of growing radish plants was shown by tests in which the manganese composition of Example 1 was diluted and sprayed onto growing radishes at application rates of 1.0, 2.0, 3.0 and 6.0 dm³ ha⁻¹ following the procedure set out in Example 3. Harvesting was carried out after 22 days and the harvested plants treated as in Example 3.

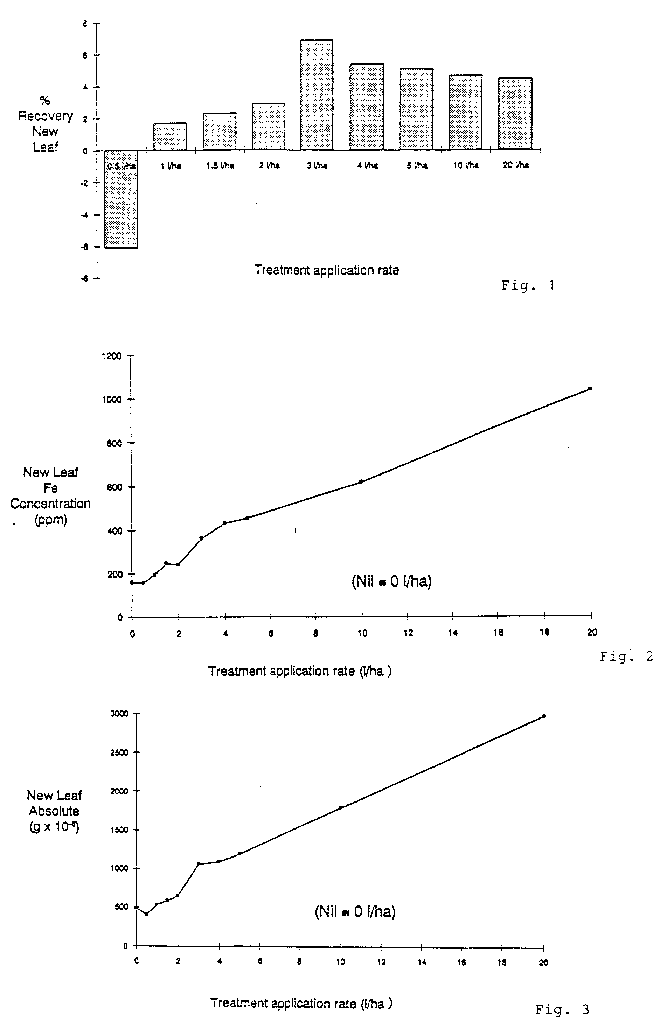

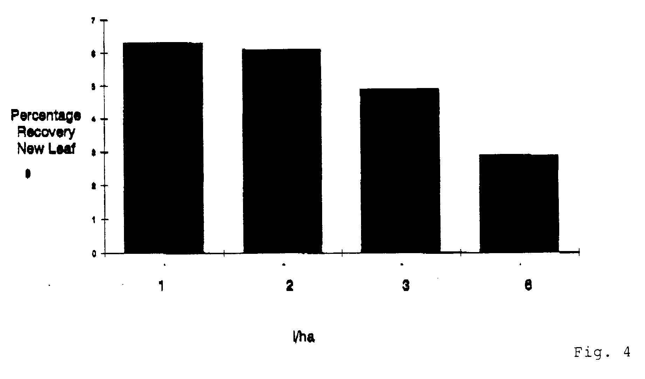

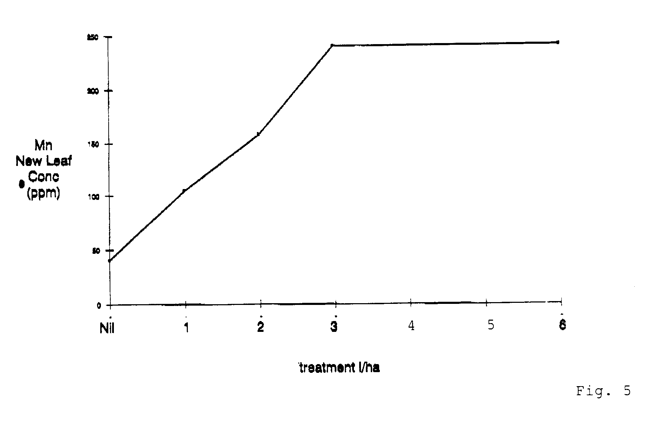

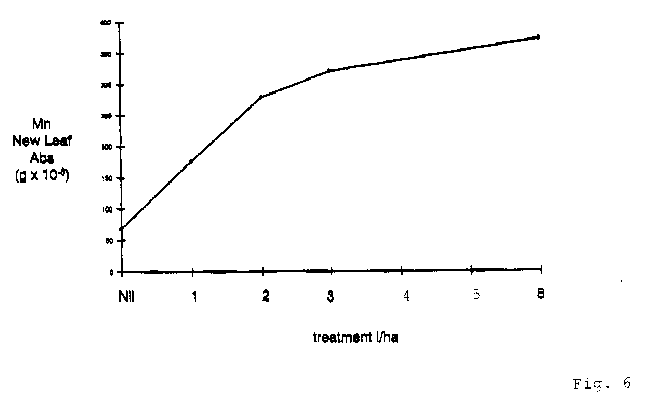

The test results are shown in Figures 4, 5 and 6 of the drawings which correspond to Figures 1, 2 and 3 respectively.

## Claims

1. A micronutrient composition in the form of an aqueous suspension concentrate comprising at least one insoluble micronutrient source and at least one surfactant, in which
(a) the micronutrient source is a source of iron and/or manganese which is present in an amount of at least 20% w/v, or
(b) the micronutrient source is a source of manganese which is present in an amount of from 10 to 80% w/v, and
the micronutrient source has a particle size in the range of from 0.5 to 50 »m.

2. A micronutrient composition according to claim 1, containing 60 to 90% w/v iron.

3. A micronutrient composition according to claim 1, containing 40 to 55% w/v manganese.

4. A micronutrient composition according to any preceding claim, in which the particle size of the source is in the range of from 1 to 10 »m.

5. A micronutrient composition according to claim 4, in which the particle size of the source is in the range of from 2 to 8 »m.

6. A micronutrient composition according to any preceding claim, in which the surfactant(s) is/are present in an amount of 0.01 to 5.0 wgt % of the composition.

7. A micronutrient composition according to claim 6, in which the surfactant(s) comprise a sodium salt of a polycarboxylic acid.

8. A micronutrient composition according to any preceding claim, containing an anti-freeze in an amount of 5.0 to 35 wgt % of the composition.

9. A micronutrient composition according to any preceding claim, containing a thickener in an amount of 0.01 to 5.0 wgt % of the composition.

10. A micronutrient composition according to claim 9, in which the thickener is an anionic heteropolysaccharide.

11. Use of a micronutrient composition according to any preceding claim for the supply of iron and/or manganese as a micronutrient to growing plants.

## Patentansprüche

1. Mikronährstoff-Zusammensetzung in Form eines wäßrigen Suspensionskonzentrats mit einem Gehalt an mindestens einer unlöslichen Mikronährstoffquelle und mindestens einem Tensid, wobei
(a) es sich bei der Mikronährstoffquelle um eine Quelle für Eisen und/oder Mangan handelt, die in einer Menge von mindestens 20 % (Gew./Vol) vorhanden ist, oder
(b) es sich bei der Mikronährstoffquelle um eine Quelle für Mangan handelt, die in einer Menge von 10 bis 80 % (Gew./Vol.) vorhanden ist, und
die Mikronährstoffquelle eine Teilchengröße im Bereich von 0,5 bis 50 »m aufweist

2. Mikronährstoff-Zusammensetzung nach Anspruch 1, enthaltend 60 bis 90 % (Gew./Vol.) Eisen.

3. Mikronährstoff-Zusammensetzung nach Anspruch 1, enthaltend 40 bis 55 % (Gew./Vol.) Mangan.

4. Mikronährstoff-Zusammensetzung nach einem der vorstehenden Ansprüche, wobei die Teilchengröße der Quelle im Bereich von 1 bis 10 »m liegt.

5. Mikronährstoff-Zusammensetzung nach Anspruch 4, wobei die Teilchengröße der Quelle im Bereich von 2 bis 8 »m liegt.

6. Mikronährstoff-Zusammensetzung nach einem der vorstehenden Ansprüche, wobei das oder die Tenside in einer Menge von 0,01 bis 5,0 Gew.-% der Zusammensetzung vorhanden sind.

7. Mikronährstoff-Zusammensetzung nach Anspruch 6, wobei das oder die Tenside ein Natriumsalz einer Polycarbonsäure umfassen.

8. Mikronährstoff-Zusammensetzung nach einem der vorstehenden Ansprüche, enthaltend ein Gefrierschutzmittel in einer Menge von 5,0 bis 35 Gew.-% der Zusammensetzung.

9. Mikronährstoff-Zusammensetzung nach einem der vorstehenden Ansprüche, enthaltend ein Verdickungsmittel in einer Menge von 0,01 bis 5,0 Gew,-% der Zusammensetzung.

10. Mikronährstoff-Zusammensetzung nach Anspruch 9, wobei es sich beim Verdickungsmittel um ein anionisches Heteropolysaccharid handelt.

11. Verwendung einer Mikronährstoff-Zusammensetzung nach einem der vorstehenden Ansprüche zur Versorgung von wachsenden Pflanzen mit Eisen und/oder Mangan as Mikronährstoff.

## Revendications

1. Composition d'oligo-éléments sous la forme d'un concentré de suspension aqueuse, comprenant au moins une source d'oligo-élément insoluble et au moins un agent tensioactif, dans laquelle
(a) la source d'oligo-élément est une source de fer et/ou de manganèse qui est présente dans une proportion d'au moins 20% en p/v, ou
(b) la source d'oligo-élément est une source de manganèse qui est présente dans une proportion de 10 à 80% en p/v, et
la source d'oligo-élément a une grosseur de particules dans la gamme de 0,5 à 50 »m.

2. Composition d'oligo-éléments selon la revendication 1, contenant 60 à 90% en p/v de fer.

3. Composition d'oligo-éléments selon la revendication 1, contenant 40 à 55% en p/v de manganèse.

4. Composition d'oligo-éléments selon l'une quelconque des revendications précédentes, dans laquelle la grosseur de particules de la source est comprise entre 1 et 10 »m.

5. Composition d'oligo-éléments selon la revendication 4, dans laquelle la grosseur de particules de la source est comprise entre 2 et 8 »m.

6. Composition d'oligo-éléments selon l'une quelconque des revendications précédentes, dans laquelle le/les agent(s) tensioactif(s) est/sont présents dans une proportion de 0,01 à 5,0% en poids de la composition.

7. Composition d'oligo-éléments selon la revendication 6, dans laquelle le/les agent(s) tensioactif(s) comprend/comprennent un sel sodique d'un acide polycarboxylique.

8. Composition d'oligo-éléments selon l'une quelconque des revendications précédentes, contenant un antigel dans une proportion de 5,0 à 35% en poids de la composition.

9. Composition d'oligo-éléments selon l'une quelconque des revendications précédentes, contenant un épaississant dans une proportion de 0,01 a 5,0% en poids de la composition.

10. Composition d'oligo-éléments selon la revendication 9, dans laquelle l'épaississant est un hétéropolysaccharide anionique.

11. Utilisation d'une composition d'oligo-éléments selon l'une quelconque des revendications précédentes pour l'administration de fer et/ou de manganèse en tant qu'oligo-éléments à des plantes en cours de croissance.
